# EUROPÄISCHE PATENTSCHRIFT

(11) **EP 3 770 481 B1**
(45) Veröffentlichungstag und Bekanntmachung des Hinweises auf die Patenterteilung: **31.12.2025**
(21) Anmeldenummer: 19188061.6
(22) Anmeldetag: 24.07.2019
(51) Int. Cl.: F16P 3/14

(54) **SENSORANORDNUNG UND VERFAHREN ZUR GEFAHRENBEREICHSÜBERWACHUNG**
SENSOR ARRANGEMENT AND METHOD FOR MONITORING A DANGER ZONE
DISPOSITIF CAPTEUR ET PROCÉDÉS DE SURVEILLANCE DE ZONE DANGEREUSE

(43) Veröffentlichungstag der Anmeldung: 27.01.2021
(73) Patentinhaber: Leuze electronic GmbH + Co. KG, 73277 Owen/Teck (DE)
(72) Erfinder: Feller, Bernhard, 86316 Friedberg (DE); Jüttner, Andreas, 81543 München (DE)
(74) Vertreter: Ruckh, Rainer Gerhard

(56) Entgegenhaltungen:
- EP-A1- 3 415 804
- EP-A2- 1 835 310
- EP-A2- 2 017 524
- DE-A1- 102006 008 805

## Beschreibung

Die Erfindung betrifft eine Sensoranordnung und ein Verfahren zur Gefahrenbereichsüberwachung an einem Arbeitsmittel.

Eine derartige Sensoranordnung umfasst wenigstens einen Sensor, mit welchem ein Schutzfeld überwacht werden kann. Mit einer so ausgebildeten Sensoranordnung kann ein Gefahrenbereich an einem Arbeitsmittel wie zum Beispiel einer Maschine oder Anlage überwacht werden.

Ein Beispiel hierfür ist eine Zugangskontrolle zu einer Maschine, deren Gefahrenbereich mit einer Umzäunung gesichert ist. In der Umzäunung befindet sich eine Eingangsöffnung, durch welche eine Fördereinheit, insbesondere ein Förderband geführt ist, um für die Maschine Material anzuliefern. Die Eingangsöffnung kann mit einem Sensor abgesichert sein, der insbesondere ein Lichtvorhang ist. Wird mit dem Lichtvorhang ein Objekteingriff registriert, wird ein Sicherheitssignal generiert, das zum Abschalten der Maschine führt. Dadurch werden Gefährdungen von Personen, die sich durch die Eingangsöffnung Zutritt zum Gefahrenbereich verschaffen, vermieden.

Um ein unnötiges Abschalten der Maschine durch Eingriff des anzuliefernden Materials in das Schutzfeld zu vermeiden, sind dem Lichtvorhang in Förderrichtung der Fördereinheit Mutingsensoren vorgeordnet, die das auf den Lichtvorhang zubewegte Material erkennen. Wird mit den Mutingsensoren das Material erkannt, wird ein Mutingsignal generiert, das die Sicherheitsfunktion des Lichtvorhangs mutet, das heißt stummschaltet. Während des Mutings generiert der Lichtvorhang auch dann kein Sicherheitssignal, wenn in deren Schutzfeld ein Objekteingriff registriert wird. Somit kann das Material auf der Fördereinheit ungehindert passieren, ohne dass die Maschine abgeschaltet wird, wodurch unnötige Stillstandzeiten der Maschine vermieden werden. Dieses Muting wird solange aufrechterhalten, wie das Material der Maschine zugeführt wird. Danach wird das Muting beendet und die Sicherheitsfunktion des Lichtvorhangs wieder aktiviert, sodass dann im Schutzfeld des Lichtvorhangs registrierte Objekteingriffe zur Generierung des Sicherheitssignals und zum Abschalten der Maschine führen.

Nachteilig hierbei ist, dass zur Vorgabe, ob ein Objekteingriff im Sensor zur Generierung eines Sicherheitssignals führt oder nicht, mit den Mutingsensoren eine zusätzliche Sensorik erforderlich ist, was den Aufwand der Sensoranordnung erheblich erhöht.

Die EP 2 017 524 A2 betrifft ein Lichtgitter, welches zur Erfassung von Objekten in einem Überwachungsbereich dient und eine Anzahl von Strahlachsen, welche jeweils von einem Sendelichtstrahlen emittierenden Sender und einem zugeordneten Empfänger gebildet sind, umfasst. Bei freiem Überwachungsbereich sind die Strahlachsen nicht unterbrochen und bei einem Objekteingriff ist im Überwachungsbereich wenigstens eine Strahlachse unterbrochen. Weiterhin umfasst das Lichtgitter eine Auswerteeinheit, mittels derer bei Eindringen eines sicherheitskritischen Objekts in den Überwachungsbereich eine Objektmeldung generierbar ist. In der Auswerteeinheit ist ein nichtsicherheitskritisches Objekt bei Passieren des Überwachungsbereichs dadurch identifizierbar, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind. Bei einem identifizierten nichtsicherheitskritischen Objekt wird in der Auswerteeinheit ein Mutingsignal generiert.

Die EP 3 415 804 A1 betrifft eine Sicherheitsvorrichtung mit wenigstens einem optischen Sicherheitssensor, welcher zur Überwachung eines flächigen oder räumlichen Überwachungsbereichs ausgebildet ist. Weiterhin umfasst die Sicherheitsvorrichtung mit eine dem Sicherheitssensor zugeordnete Sicherheitsausgangsschaltung mit einer Anordnung von Sicherheitsausgängen, welche abhängig von Signalen des Sicherheitssensors gesteuert sind. Es sind Umschaltmittel vorgesehen, mittels derer wenigstens ein Schutzfeld und/oder wenigstens ein Signalfeld aktivierbar ist. Der Sicherheitssensor generiert ein Sicherheitssignal in Form eines Abschaltens der Sicherheitsausgänge, falls mit dem Sicherheitssensor ein Objekt innerhalb des aktivierten Schutzfelds detektiert wird, oder falls innerhalb eines vorgegebenen Zeitintervalls kein zulässiges Objekt innerhalb des aktivierten Signalfelds detektiert wird.

Die EP 1 835 310 A2 betrifft ein Lichtgitter zur Erfassung von Objekten in einem Überwachungsbereich mit einer vorgegebenen Anzahl von Sendelichtstrahlen emittierenden Sendern und Empfängern. Jeweils ein Empfänger und wenigstens ein zugeordneter Sender bilden eine Strahlachse mit einer Auswerteeinheit, in welcher an den Ausgängen der Empfänger anstehende Empfangssignale zur Generierung eines Objektfeststellungssignals ausgewertet werden. In die Auswerteeinheit ist zur Parametrierung von Strahlachsen während des Betriebs des Lichtgitters mindestens ein Steuersignal einlesbar.

Die DE 10 2006 008 805 A1 betrifft einen optischen Sensor und ein Verfahren zur Überwachung einer Schutzzone an einem Arbeitsmittel mittels eines optischen Sensors mit einer Kamera und einer Auswerteeinheit. Bei Erfassen eines sicherheitskritischen Objekts in der Schutzzone wird eine Objektmeldung generiert, mittels derer das Arbeitsmittel außer Betrieb gesetzt wird. Bei Erfassen eines nicht sicherheitskritischen Objekts innerhalb der Schutzzone wird wenigstens ein Bereich dieser Schutzzone überbrückt, so dass ein Eindringen eines sicherheitskritischen Objekts in diesen Bereich nicht zur Generierung einer Objektmeldung führt.

Der Erfindung liegt die Aufgabe zugrunde, eine Sensoranordnung bereitzustellen, welche bei geringem konstruktiven Aufwand eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Gefahrenbereichsüberwachung an einem Arbeitsmittel mit wenigstens einem Sensor, welcher zur Überwachung eines Schutzfeldes ausgebildet ist. Mit dem Schutzfeld wird ein seitlicher Zugang zum Arbeitsmittel überwacht. Eine Steuer- und Auswerteeinheit ist vorgesehen, mittels derer eine Unterscheidung von gefahrbringenden und nicht gefahrbringenden Objekteingriffen von Objekten im Schutzfeld durchgeführt ist. In dem eine ortsaufgelöste und gegebenenfalls auch zeitaufgelöste Analyse der Objekteingriffe durchgeführt wird. Die Steuer- und Auswerteeinheit generiert nur dann ein Sicherheitssignal, wenn ein gefahrbringender Objekteingriff vorliegt. Unabhängig davon, ob das Objekt ein sicherheitskritisches Objekt oder ein nicht sicherheitskritisches Objekt ist.

Die Erfindung betrifft weiterhin ein Verfahren zur Gefahrenbereichsüberwachung an einem Arbeitsmittel.

Der Grundgedanke der Erfindung besteht somit darin, Objekteingriffe dahin zu klassifizieren, ob diese gefahrbringend oder nicht gefahrbringend sind. Hierzu wird eine ortsaufgelöste und gegebenenfalls auch zeitaufgelöste Analyse der Objekteingriffe durchgeführt.

Besonders vorteilhaft ist mit dem wenigstens einen Sensor feststellbar, in welchen Bereichen des Schutzfeldes ein Objekteingriff erfolgt. In der Steuer- und Auswerteeinheit erfolgt abhängig von den Bereichen eine Klassifizierung, ob ein gefahrbringender oder nicht gefahrbringender Objekteingriff erfolgt.

Das erfindungsgemäße Sicherheitskonzept unterscheidet sich von bekannten Sicherheitskonzepten, bei welchen eine Unterscheidung von sicherheitskritischen Objekten und nicht sicherheitskritischen Objekten erfolgt. Anhand charakteristischer Merkmale werden dort sicherheitskritische Objekte wie zum Beispiel Personen von nicht sicherheitskritischen Objekten wie zum Beispiel Werkstücken unterschieden. Wird dann mit einem Sensor ein sicherheitskritisches Objekt registriert, wird zwingend ein Sicherheitssignal generiert, wogegen eine Erkennung eines nicht sicherheitskritischen Objektes nicht zur Generierung eines Sicherheitssignals führt.

Bei der erfindungsgemäßen Sensoranordnung kann dagegen eine Person, die nach den bekannten Sicherheitskonzepten als sicherheitskritisches Objekt eingestuft würde, sowohl einen gefahrbringenden Objekteingriff als auch einen nicht gefahrbringenden Objekteingriff verursachen. Ein nicht gefahrbringender Objekteingriff kann beispielsweise darin bestehen, dass die Person mit einem Arm durch das Schutzfeld greift, um im Bereich des Arbeitsmittels einen Arbeitsvorgang durchzuführen, wie zum Beispiel ein Verpackungs- oder Montagevorgang. Ein gefahrbringender Objekteingriff kann beispielsweise darin bestehen, dass eine Person versucht in den Bereich des Arbeitsmittels zu klettern und dabei in den Bereich des Schutzfeldes gelangt.

Derartige gefahrbringende Objekteingriffe und nicht gefahrbringende Objekteingriffe können bei der erfindungsgemäßen Sensoranordnung unterschieden werden, sodass nur gefahrbringende Objekteingriffe zu einer Generierung eines Sicherheitssignals, das insbesondere als Abschaltbefehl für das Arbeitsmittel ausgebildet ist, führen, wodurch die Verfügbarkeit des Arbeitsmittels erhöht wird.

Ein wesentlicher Vorteil der Erfindung besteht darin, dass der oder die Sensoren zur Schutzfeldüberwachung mit der Steuer- und Auswerteeinheit ein autarkes System bildet, das ohne aufwändige Programmierungen für die Gefahrenbereichsüberwachung des Arbeitsmittels eingesetzt werden kann. Insbesondere sind weder eine zusätzliche Sensorik noch aufwändige Einlernvorgänge erforderlich um die erfindungsgemäße Gefahrenbereichsüberwachung, insbesondere die Differenzierung zwischen gefahrbringenden Objekteingriffen und nicht gefahrbringenden Objekteingriffen durchführen zu können.

Da die erfindungsgemäße Sensoranordnung ein autarkes System bildet, entfallen aufwändige Schnittstellen zu weiteren Einheiten, was dazu führt, dass die erfindungsgemäße Sensoranordnung kostengünstig herstellbar ist. Auch zeichnet sich die erfindungsgemäße Sensoranordnung durch eine einfache Inbetriebnahme aus.

Gemäß einer vorteilhaften Ausgestaltung der Erfindung erfolgt in der Steuer- und Auswerteeinheit eine Zeitüberwachung von Objekteingriffen.

Je nach Betriebszustand des Arbeitsmittels können die gefahrbringende Objekteingriffe und nicht gefahrbringende Objekteingriffe mitabhängig in Art, Form und Ort innerhalb des beziehungsweise der Schutzfelder variieren. Mit einer Zeitüberwachung von Objekteingriffen kann eine Anpassung an derartige zeitabhängige Größen erfolgen.

Insbesondere sind Objekteingriffe nur zu vorgegebenen Zeiten zulässig. Bei Feststellen eines unzulässigen Objekteingriffs generiert die Steuer- und Auswerteeinheit das Sicherheitssignal.

Gemäß einer vorteilhaften Ausgestaltung ist der wenigstens eine Sensor ein Sicherheitssensor.

Der Sensor weist hierzu einen fehlersicheren Aufbau auf und kann damit für Applikationen im Bereich der Sicherheitstechnik eingesetzt werden.

Vorteilhaft ist die Steuer- und Auswerteeinheit im wenigstens einen Sensor integriert, oder die Steuer- und Auswerteeinheit ist eine Sicherheitssteuerung.

Ist die Steuer- und Auswerteeinheit in einem Sicherheitssensor integriert, weist die Steuer- und Auswerteeinheit einen entsprechend fehlersicheren Aufbau auf. Auch weist die Sicherheitssteuerung, in der die Steuer- und Auswerteeinheit integriert sein kann, einen fehlersicheren Aufbau auf.

In beiden Fällen ist gewährleistet, dass die Sensoranordnung in ihrer Gesamtheit einen fehlersicheren Aufbau aufweist und in Applikationen im Bereich der Sicherheitstechnik eingesetzt werden kann.

Vorteilhaft ist der wenigstens eine Sensor ein optischer Sensor oder ein Radarsensor.

Insbesondere ist der wenigstens eine Sensor ein Flächendistanzsensor oder ein Lichtvorhang.

Gemäß einer besonders vorteilhaften Ausgestaltung der Erfindung ist das Arbeitsmittel eine Fördereinheit, die an gegenüberliegenden Seiten jeweils mit einem Sensor abgesichert ist, wobei die Schutzfelder über eine Förderfläche der Fördereinheit nach oben hervorstehen.

In diesem Fall sind besonders zweckmäßig die Sensoren jeweils von einem eine Anzahl von Strahlachsen ausbildenden Lichtvorhang gebildet, wobei in der Steuer- und Auswerteeinheit registriert wird, welche der Strahlachsen bei einem Objekteingriff unterbrochen sind. Abhängig hiervon erfolgt die Generierung des Sicherheitssignals.

Anstelle von Lichtvorhängen können auch Flächendistanzsensoren eingesetzt werden.

Bei dieser Ausgestaltung wird mit der erfindungsgemäßen Sensoranordnung erreicht, dass Personen mit den Händen durch die Schutzfelder greifen können, um auf der Fördereinheit Arbeitsvorgänge durchzuführen, ohne dass hierzu die Sensoranordnung ein Sicherheitssignal generiert, das zum Anhalten der Fördereinheit führen würde, da diese Eingriffe als nicht gefahrbringende Objekteingriffe erkannt werden, insbesondere dadurch, dass nur mittlere Strahlachsen des Lichtvorhangs unterbrochen werden.

Hierzu erfolgt die Auswertung derart, dass die Unterbrechung der obersten Strahlachse oder Strahlachsen eines Lichtvorhangs in der Steuer- und Auswerteeinheit als gefahrbringender Objekteingriff gewertet wird.

Dadurch kann erkannt werden, wenn eine Person unbefugt versucht über das Schutzfeld hinweg in den Bereich der Fördereinheit zu klettern.

Weiterhin wird die Unterbrechung der untersten Strahlachse oder Strahlachsen eines Lichtvorhangs in der Steuer- und Auswerteeinheit als gefahrbringender Objekteingriff gewertet.

Hiermit wird erfasst, wenn eine Person unbefugt versucht unter dem Schutzfeld des Lichtvorhangs auf die Fördereinheit zu kriechen.

Da das Überklettern oder Unterkriechen der Schutzfelder der Lichtvorhänge eine gewisse Zeitdauer benötigt, ist es vorteilhaft, wenn die Generierung eines Sicherheitssignals nur erfolgt, wenn die obersten und/oder untersten Strahlachsen für eine angegebene Mindestzeit unterbrochen sind.

Dadurch können kurzzeitige unkritische Eingriffe in die Schutzfelder als nicht gefahrbringende Objekteingriffe ausgeblendet werden.

Die Erfindung wird im Folgenden anhand der Zeichnungen erläutert. Es zeigen:
- Figur 1:: Schematische Darstellung einer erfindungsgemäßen Sensoranordnung
a) in einer Draufsicht von oben
b) in einer Seitenansicht
c) in einem Längsschnitt
- Figur 2:: Sensor in Form eines Flächendistanzsensors für die Sensoranordnung gemäß Figur 1.
- Figur 3:: Sensor in Form eines Lichtvorhangs für die Sensoranordnung gemäß Figur 1.
- Figur 4:: Perspektivische Darstellung eines Ausführungsbeispiels der erfindungsgemäßen Sensoranordnung.
- Figur 5:: Längsschnitt-Darstellung der Sensoranordnung gemäß Figur 1.

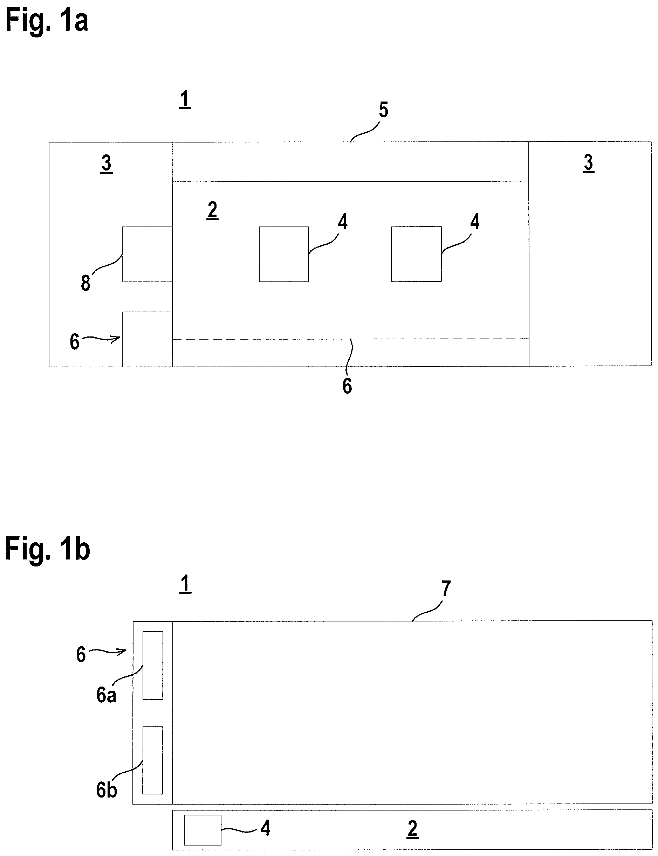

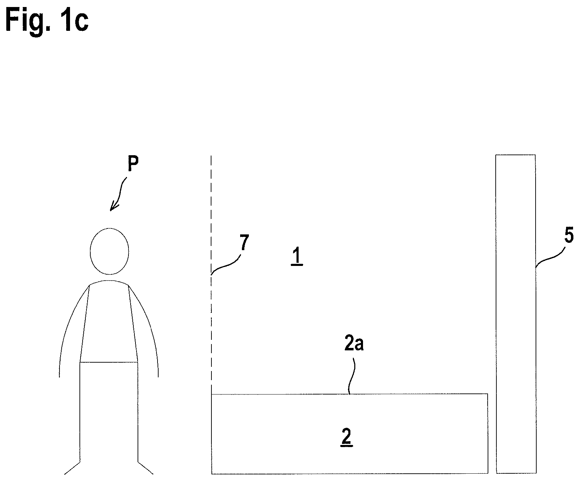

Die Figuren 1a bis 1c zeigen schematisch den Aufbau der erfindungsgemäßen Sensoranordnung 1.

Die Sensoranordnung 1 dient zur Gefahrenbereichsüberwachung an einem Arbeitsmittel. Das Arbeitsmittel besteht im vorliegenden Fall aus einem Förderband 2, das zum Beispiel zwischen zwei Bearbeitungsstationen 3 angeordnet ist und auf welchem Gegenstände 4 transportiert werden können. Das Arbeitsmittel kann auch ein Fließband, eine Roboterzelle oder dergleichen sein. Eine Längsseite des Förderbands 2 ist durch eine Wand 5 abgeschlossen und damit gegen Zutritt geschützt. Die andere Längsseite ist offen. Diese offene Längsseite wird mit einem Sensor 6 geschützt.

Der Sensor 6 weist Sensorkomponenten 6a auf, mit denen ein Schutzfeld 7 generiert wird. Der Sensor 6 weist eine Auswerteeinheit 6b auf, mit der in den Sensorkomponenten 6a generierte Sensorsignale ausgewertet werden.

Wie aus den Figuren 1a bis 1c ersichtlich, erstreckt sich das mit dem Sensor 6 erfasste Schutzfeld 7 über die gesamte Länge des Förderbands 2 und steht senkrecht von der in einer horizontalen Ebene liegenden Oberseite des Förderbands 2 hervor, welche eine Förderfläche 2a ausbildet, sodass mit dem Schutzfeld 7 eine komplette seitliche Absicherung des Förderbands 2 erzielt wird.

Erfindungsgemäß erfolgt in der Auswerteeinheit 6b des Sensors 6, die im vorliegenden Fall eine Steuer- und Auswerteeinheit der Sensoranordnung bildet, eine Objekterfassung derart, dass gefahrbringende Objekteingriffe von nicht gefahrbringenden Objekteingriffen unterschieden werden.

Hierzu erfolgt in der Auswerteeinheit 6b eine ortsaufgelöste Auswertung derart, dass ermittelt wird, in welchen Bereichen des Schutzfeldes 7 Objekteingriffe erfolgen. Diese Bereiche werden dahingehend klassifiziert, ob diese gefahrbringend sind oder nicht. Ein nicht gefahrbringender Objekteingriff liegt beispielsweise vor, wenn eine Person P durch das Schutzfeld 7 greift um Gegenstände 4 auf dem Förderband 2 zu bearbeiten. In diesem Fall liegt ein lokal begrenzter Eingriff im Schutzfeld 7 vor. Ein gefahrbringender Obj ekteingriff liegt beispielsweise vor, wenn die Person P auf das Förderband 2 klettert und damit eine großflächige Verletzung des Schutzfeldes 7 bewirkt.

Zusätzlich kann auch eine Zeitüberwachung von Objekteingriffen im Schutzfeld 7 erfolgen, wobei insbesondere bestimmte Objekteingriffe im Schutzfeld 7 nur zu bestimmten Zeiten erlaubt sind.

In der Auswerteeinheit 6b wird dementsprechend ein binäres Schaltsignal generiert, dessen Schaltzustände angeben, ob ein gefahrbringender Objekteingriff vorliegt oder nicht. Das Schaltsignal wird an eine Steuerung des Förderbands 2 ausgegeben.

Für den Einsatz der Sensoranordnung 1 im Bereich der Sicherheitstechnik ist der Sensor 6 als Sicherheitssensor ausgebildet. Die Auswerteeinheit 6b weist hierzu einen fehlersicheren Aufbau auf, insbesondere in Form zweier sich gegenseitig zyklisch überwachender Rechnereinheiten. Auch die Steuerung ist als Sicherheitssteuerung 8 ausgebildet, die ebenfalls zwei sich zyklisch überwachende Rechnereinheiten aufweisen kann.

Wird ein gefahrbringender Objekteingriff im Schutzfeld 7 mit dem Sensor 6 erkannt, generiert dieser ein Schaltsignal mit einem entsprechenden Schaltzustand. Dieses bildet ein Sicherheitssignal, das zum Abschalten des Förderbands 2 durch die Sicherheitssteuerung 8 führt.

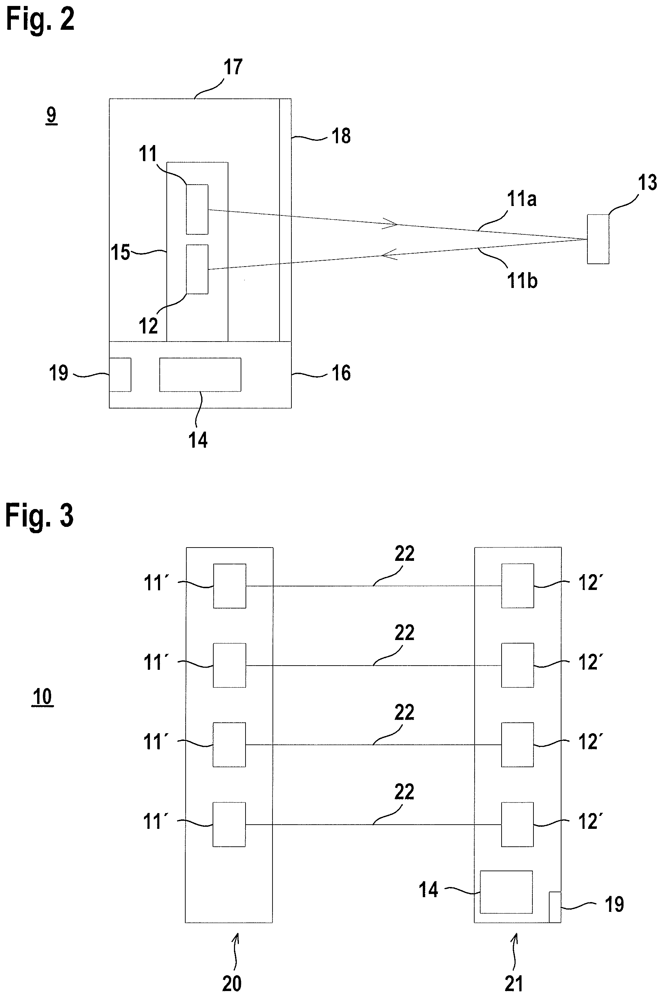

Der Sensor 6 kann als Radarsensor oder dergleichen ausgebildet sein. Im vorliegenden Fall ist der Sensor 6 als optischer Sensor ausgebildet. Die Figuren 2 und 3 zeigen Ausführungsbeispiele des optischen Sensors in Form eines Flächendistanzsensors 9 oder eines Lichtvorhangs 10.

Figur 2 zeigt ein Ausführungsbeispiel eines Flächendistanzsensors. Der dort dargestellte Flächendistanzsensor weist einen Sendelichtstrahlen 11a emittierenden 11 und einen Empfangslichtstrahlen 11b empfangenden Empfänger 12 auf, die einen nach einem Impuls-Laufzeit-Verfahren arbeitenden Distanzsensor ausbilden. Zur Distanzbestimmung eines Objekts 13 wird in einer Auswerteeinheit 14 (entsprechend der Auswerteeinheit 6b des Sensors 6 gemäß den Figuren 1a bis 1c) die Laufzeit der Sendelichtstrahlen 11a vom Sender 11 zum Objekt 13 und zurück zum Empfänger 12 bestimmt und in einen Distanzwert umgerechnet. Der Sender 11 und Empfänger 12 sind in einem rotierenden Messkopf 15 angeordnet. Dieser sitzt auf einem stationären Sockel 16 auf, in dem die Auswerteeinheit 14 untergebracht ist. Der motorisch angetriebene Messkopf 15 dreht sich um eine vertikale Drehachse (bezogen auf die Darstellung gemäß Figur 2). Diese Sensorkomponenten 6a sind in einem auf dem Sockel 16 gelagerten Gehäuse 17 angeordnet. Die Sendelichtstrahlen 11a beziehungsweise Empfangslichtstrahlen 11b werden durch ein Fenster 18 im Gehäuse 17 geführt. An die Auswerteeinheit 14 ist ein Schaltausgang 19 für eine Signalausgabe angeschlossen.

Durch die Drehbewegung des Messkopfs 15 werden die Sendelichtstrahlen 11a in einem in einer horizontalen Ebene liegenden Abtastbereich periodisch abgelenkt.

Der Winkelbereich des Abtastbereichs ergibt sich durch die Ausdehnung des Fensters 18 in Umfangsrichtung des Gehäuses 17.

Durch die fortlaufenden Distanzmessungen und Bestimmung der aktuellen Winkelpositionen der Sendelichtstrahlen 11a kann eine Positionsbestimmung von Objekten 13 im Abtastbereich durchgeführt werden.

Für den Einsatz im Bereich der Sicherheitstechnik weist die Auswerteeinheit 14 einen redundanten Aufbau in Form zweier sich zyklisch überwachenden Rechnereinheiten auf.

Figur 3 zeigt einen optischen Sensor in Form eines Lichtvorhangs 10, mittels dessen ein flächiger Überwachungsbereich überwacht wird. Der Lichtvorhang 10 weist eine Sendereinheit 20 und eine Empfängereinheit 21 auf, deren Komponenten jeweils in einem Gehäuse integriert sind und die an gegenüberliegenden Rändern des Überwachungsbereichs angeordnet sind.

In der Sendereinheit 20 befindet sich eine Reihenanordnung von Lichtstrahlen 22 emittierenden Sendern 11', in der Empfängereinheit 21 befindet sich eine entsprechende Anzahl von Empfängern 12'. Jeweils ein Sender 11' und ein gegenüberliegender Empfänger 12' bilden eine Strahlachse. Die Strahlachsen werden durch eine nicht dargestellte Sendersteuerung und eine optische Synchronisierung zyklisch einzeln nacheinander aktiviert. Die Objektdetektion erfolgt nach dem Lichtschrankenprinzip. In der Auswerteeinheit 14 erfolgt hierzu eine Schwellwertberechnung der Empfangssignale der Empfänger 12' zur Generierung eines binären Schaltsignals. In der Auswerteeinheit 14 wird das Schaltsignal generiert. Die Auswerteeinheit 14 weist einen redundanten Aufbau auf. Das Schaltsignal wird über einen Schaltausgang 19 ausgegeben.

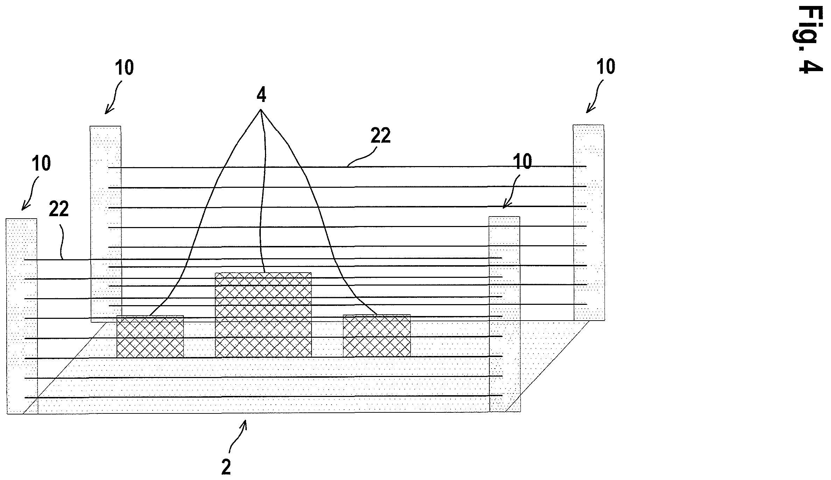

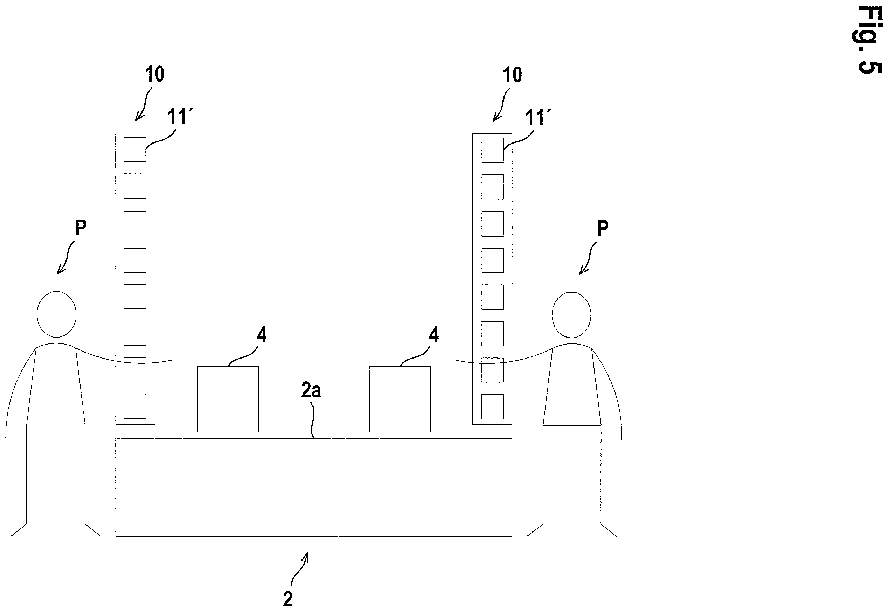

Die Figuren 4 und 5 zeigen ein Ausführungsbeispiel einer Sensoranordnung 1, welche zwei Lichtvorhänge 10 aufweist, mittels derer gegenüberliegende Längsseiten eines Förderbandes 2 abgesichert werden. Die Lichtvorhänge 10 sind so orientiert, dass deren das Schutzfeld 7 aufspannende Strahlachsen in jeweils einer vertikalen Ebene senkrecht zur Förderfläche 2a des Förderbands 2 liegen.

In jedem Lichtvorhang 10 wird abhängig davon, welche der Strahlachsen durch Objekteingriffe unterbrochen sind, ein binäres Schaltsignal generiert, dessen Schaltzustände angeben, ob ein gefahrbringender Objekteingriff vorliegt oder nicht. Diese Schaltsignale werden an die Sicherheitssteuerung 8 ausgegeben. In der Sicherheitssteuerung 8 wird durch eine ODER Verknüpfung das Sicherheitssignal generiert, das heißt ein das Förderband 2 stillsetzendes Sicherheitssignal wird generiert, wenn in wenigstens einem Lichtvorhang 10 ein gefahrbringender Obj ekteingriff registriert wird.

Im vorliegenden Fall wird in einem Lichtvorhang 10 ein Schaltsignal mit dem Schaltzustand "gefahrbringender Objekteingriff" dann generiert, wenn die eine unterste oder die untersten Strahlachsen unterbrochen werden, da dadurch der Fall detektiert wird, wenn eine Person P unter dem Schutzfeld 7 des Lichtvorhangs 10 auf die Förderfläche 2a des Förderbands 2 kriechen möchte.

Weiterhin wird in einem Lichtvorhang 10 ein Schaltsignal mit dem Schaltzustand "gefahrbringender Objekteingriff" dann generiert, wenn die eine oberste oder die obersten Strahlachsen unterbrochen werden, da dadurch der Fall detektiert wird, wenn eine Person P über den Lichtvorhang 10 hinweg auf die Förderfläche 2a klettern möchte.

In beiden Fällen nimmt das Schaltsignal erst dann den Schaltzustand "gefahrbringender Objekteingriff" ein, wenn die entsprechenden Strahlachsen für eine bestimmte Mindestzeit unterbrochen sind. Hiermit wird berücksichtigt, dass eine Person P stets eine gewisse Zeit benötigt, um auf die Förderfläche 2a des Förderbands 2 zu gelangen.

Greift dagegen, wie in Figur 5 dargestellt, eine Person P im Bereich der mittleren Strahlachsen durch den Lichtvorhang 10, so wird dies im Lichtvorhang 10 als nicht gefahrbringender Objekteingriff gewertet, da die Person P durch das Schutzfeld 7 greift, um Gegenstände 4 aufzunehmen oder zu bearbeiten.

Die Abgrenzung, ob eine Strahlachse eines Lichtvorhangs 10 eine oberste, eine mittlere oder unterste Strahlachse im Sinne der vorgenannten Auswertung bildet, kann durch einen Parametriervorgang festgelegt werden.

### Bezugszeichenliste

- (1): Sensoranordnung
- (2): Förderband
- (2a): Förderfläche
- (3): Bearbeitungsstation
- (4): Gegenstand
- (5): Wand
- (6): Sensor
- (6a): Sensorkomponente
- (6b): Auswerteeinheit
- (7): Schutzfeld
- (8): Sicherheitssteuerung
- (9): Flächendistanzsensor
- (10): Lichtvorhang
- (11): Sender
- (11'): Sender
- (11a): Sendelichtstrahl
- (11b): Empfangslichtstrahl
- (12): Empfänger
- (12'): Empfänger
- (13): Objekt
- (14): Auswerteeinheit
- (15): Messkopf
- (16): Sockel
- (17): Gehäuse
- (18): Fenster
- (19): Schaltausgang
- (20): Sendereinheit
- (21): Empfängereinheit
- (22): Lichtstrahl

- P: Person

## Patentansprüche

1. Sensoranordnung (1) zur Gefahrenbereichsüberwachung an einem Arbeitsmittel mit wenigstens einem Sensor (6), welcher zur Überwachung eines Schutzfeldes (7) ausgebildet ist, wobei mit dem Schutzfeld (7) ein seitlicher Zugang zum Arbeitsmittel überwacht wird, **dadurch gekennzeichnet, dass** eine Steuer- und Auswerteeinheit vorgesehen ist, mittels derer eine Unterscheidung von gefahrbringenden und nicht gefahrbringenden Objekteingriffen von Objekten im Schutzfeld (7) durchgeführt ist, in dem eine ortsaufgelöste und gegebenenfalls auch zeitaufgelöste Analyse der Objekteingriffe durchgeführt wird und dass die Steuer- und Auswerteeinheit nur dann ein Sicherheitssignal generiert, wenn ein gefahrbringender Objekteingriff vorliegt, unabhängig davon, ob das Objekt ein sicherheitskritisches Objekt oder ein nicht sicherheitskritisches Objekt ist.

2. Sensoranordnung (1) nach Anspruch 1, **dadurch gekennzeichnet, dass** mit dem wenigstens einen Sensor (6) feststellbar ist, in welchen Bereichen des Schutzfeldes (7) ein Objekteingriff erfolgt, und dass in der Steuer- und Auswerteeinheit abhängig von den Bereichen eine Klassifizierung erfolgt, ob ein gefahrbringender oder nicht gefahrbringender Objekteingriff erfolgt.

3. Sensoranordnung (1) nach einem der Ansprüche 1 oder 2, **dadurch gekennzeichnet, dass** in der Steuer- und Auswerteeinheit eine Zeitüberwachung von Objekteingriffen erfolgt.

4. Sensoranordnung (1) nach Anspruch 3, **dadurch gekennzeichnet, dass** Objekteingriffe nur zu vorgegebenen Zeiten zulässig sind, und dass bei Feststellen eines unzulässigen Objekteingriffs die Steuer- und Auswerteeinheit das Sicherheitssignal generiert.

5. Sensoranordnung (1) nach einem der Ansprüche 1 - 4, **dadurch gekennzeichnet, dass** der wenigstens eine Sensor (6) ein Sicherheitssensor ist.

6. Sensoranordnung (1) nach Anspruch 5, **dadurch gekennzeichnet, dass** die Steuer- und Auswerteeinheit im wenigstens einen Sensor (6) integriert ist, oder dass die Steuer- und Auswerteeinheit eine Sicherheitssteuerung (8) ist.

7. Sensoranordnung (1) nach einem der Ansprüche 1 - 6, **dadurch gekennzeichnet, dass** der wenigstens eine Sensor (6) ein optischer Sensor oder ein Radarsensor ist.

8. Sensoranordnung (1) nach Anspruch 7, **dadurch gekennzeichnet, dass** der wenigstens eine Sensor (6) ein Flächendistanzsensor (9) oder ein Lichtvorhang (10) ist.

9. Sensoranordnung (1) nach einem der Ansprüche 1 - 8, **dadurch gekennzeichnet, dass** das Sicherheitssignal ein Abschaltbefehl für das Arbeitsmittel ist.

10. Sensoranordnung (1) nach einem der Ansprüche 1 - 9, **dadurch gekennzeichnet, dass** das Arbeitsmittel eine Fördereinheit ist, die an gegenüberliegenden Seiten jeweils mit einem Sensor (6) abgesichert ist, wobei die Schutzfelder (7) über eine Förderfläche (2a) der Fördereinheit nach oben hervorstehen.

11. Sensoranordnung (1) nach Anspruch 10, **dadurch gekennzeichnet, dass** die Sensoren (6) jeweils von einem eine Anzahl von Strahlachsen ausbildenden Lichtvorhang (10) gebildet sind, wobei in der Steuer- und Auswerteeinheit registriert wird, welche der Strahlachsen bei einem Objekteingriff unterbrochen sind und abhängig hiervon die Generierung des Sicherheitssignals erfolgt.

12. Sensoranordnung (1) nach Anspruch 11, **dadurch gekennzeichnet, dass** die Unterbrechung der untersten Strahlachse oder Strahlachsen eines Lichtvorhangs (10) in der Steuer- und Auswerteeinheit als gefahrbringender Obj ekteingriff gewertet wird.

13. Sensoranordnung (1) nach einem der Ansprüche 11 oder 12, **dadurch gekennzeichnet, dass** die Unterbrechung der obersten Strahlachse oder Strahlachsen eines Lichtvorhangs (10) in der Steuer- und Auswerteeinheit als gefahrbringender Objekteingriff gewertet wird.

14. Sensoranordnung (1) nach einem der Ansprüche 12 oder 13, **dadurch gekennzeichnet, dass** die Generierung eines Sicherheitssignals nur erfolgt, wenn die obersten und/oder untersten Strahlachsen für eine angegebene Mindestzeit unterbrochen sind.

15. Verfahren zur Gefahrenbereichsüberwachung an einem Arbeitsmittel mittels einer Sensoranordnung (1) mit wenigstens einem Sensor (6), welcher zur Überwachung eines Schutzfeldes (7) ausgebildet ist, wobei mit dem Schutzfeld (7) ein seitlicher Zugang zum Arbeitsmittel überwacht wird, **dadurch gekennzeichnet, dass** eine Steuer- und Auswerteeinheit vorgesehen ist, mittels derer eine Unterscheidung von gefahrbringenden und nicht gefahrbringenden Objekteingriffen von Objekten im Schutzfeld (7) durchgeführt wird, in dem eine ortsaufgelöste und gegebenenfalls auch zeitaufgelöste Analyse der Objekteingriffe durchgeführt wird und dass die Steuer- und Auswerteeinheit nur dann ein Sicherheitssignal generiert, wenn ein gefahrbringender Objekteingriff vorliegt, unabhängig davon, ob das Objekt ein sicherheitskritisches Objekt oder ein nicht sicherheitskritisches Objekt ist.

## Claims

1. Sensor arrangement (1) for monitoring a danger zone on a work equipment with at least one sensor (6), which is designed to monitor a protective field (7), whereby the protective field (7) monitors lateral access to the work equipment, **characterised in that** a control and evaluation unit is provided, by means of which a distinction is made between dangerous and non-dangerous object intrusions by objects in the protective field (7) is carried out by means of a spatially resolved and, if necessary, also temporally resolved analysis of the object intrusions, and that the control and evaluation unit only generates a safety signal if there is a hazardous object intrusion, regardless of whether the object is a safety-critical object or a non-safety-critical object.

2. Sensor arrangement (1) according to claim 1, **characterised in that** said at least one sensor (6) can be used to determine in which areas of the protective field (7) an object intrusion occurs, and that the control and evaluation unit classifies whether a dangerous or non-dangerous object intrusion occurs depending on the areas.

3. Sensor arrangement (1) according to one of claims 1 or 2, **characterised in that** the control and evaluation unit monitors the time of object interference.

4. Sensor arrangement (1) according to claim 3, **characterised in that** object interference is only permitted at specified times and that, if inadmissible object interference is detected, the control and evaluation unit generates the safety signal.

5. Sensor arrangement (1) according to one of claims 1 to 4, **characterised in that** said at least one sensor (6) is a safety sensor.

6. Sensor arrangement (1) according to claim 5, **characterised in that** the control and evaluation unit is integrated in said at least one sensor (6), or that the control and evaluation unit is a safety control (8).

7. Sensor arrangement (1) according to one of claims 1-6, **characterised in that** said at least one sensor (6) is an optical sensor or a radar sensor.

8. Sensor arrangement (1) according to claim 7, **characterised in that** said at least one sensor (6) is an area distance sensor (9) or a light curtain (10).

9. Sensor arrangement (1) according to one of claims 1 to 8, **characterised in that** the safety signal is a switch-off command for the work equipment.

10. Sensor arrangement (1) according to one of claims 1 to 9, **characterised in that** the work equipment is a conveyor unit which is secured on opposite sides by a sensor (6) in each case, wherein the protective fields (7) protrude upwards above a conveyor surface (2a) of the conveyor unit.

11. Sensor arrangement (1) according to claim 10, **characterised in that** the sensors (6) are each formed by a light curtain (10) forming a number of beam axes, wherein the control and evaluation unit registers which of the beam axes are interrupted when an object interferes with them and generates the safety signal depending on this.

12. Sensor arrangement (1) according to claim 11, **characterised in that** the interruption of the lowest beam axis or beam axes of a light curtain (10) is evaluated in the control and evaluation unit as a dangerous object intrusion.

13. Sensor arrangement (1) according to one of claims 11 or 12, **characterised in that** the interruption of the uppermost beam axis or beam axes of a light curtain (10) is evaluated in the control and evaluation unit as a dangerous object intrusion.

14. Sensor arrangement (1) according to one of claims 12 or 13, **characterised in that** a safety signal is only generated if the uppermost and/or lowermost beam axes are interrupted for a specified minimum time.

15. Method for monitoring a danger zone on a work equipment by means of a sensor arrangement (1) with at least one sensor (6), which is designed to monitor a protective field (7), wherein the protective field (7) is used to monitor lateral access to the work equipment, **characterised in that** a control and evaluation unit is provided, by means of which a distinction is made between hazardous and non-hazardous object intrusions of objects in the protective field (7) is carried out by means of a spatially resolved and, if necessary, also time-resolved analysis of the object intrusions, and that the control and evaluation unit only generates a safety signal if a hazardous object intrusion is present, regardless of whether the object is a safety-critical object or a non-safety-critical object.

## Revendications

1. Dispositif de détection (1) pour la surveillance d'une zone dangereuse sur un équipement de travail, comprenant au moins un capteur (6) qui est conçu pour surveiller un champ de protection (7), le champ de protection (7) permettant de surveiller un accès latéral à l'équipement de travail, **caractérisé en ce qu'**il est prévu une unité de commande et d'évaluation au moyen de laquelle une distinction est effectuée entre les interventions dangereuses et non dangereuses d'objets dans le champ de protection (7), dans lequel une analyse résolue en position et, le cas échéant, également résolue dans le temps des interventions d'objets est effectuée, et **en ce que** l'unité de commande et d'évaluation ne génère un signal de sécurité qu'en cas d'intervention dangereuse d'un objet, indépendamment du fait que l'objet soit un objet critique pour la sécurité ou un objet non critique pour la sécurité.

2. Dispositif de capteurs (1) selon la revendication 1, **caractérisé en ce qu'**au moins un capteur (6) permet de déterminer dans quelles zones du champ de protection (7) une intrusion d'objet a lieu et **en ce que** l'unité de commande et d'évaluation effectue une classification en fonction des zones pour déterminer s'il s'agit d'une intrusion d'objet dangereuse ou non dangereuse.

3. Dispositif de capteurs (1) selon l'une des revendications 1 ou 2, **caractérisé en ce qu'**une surveillance temporelle des interventions d'objets est effectuée dans l'unité de commande et d'évaluation.

4. Dispositif de détection (1) selon la revendication 3, **caractérisé en ce que** les intrusions d'objets ne sont autorisées qu'à des moments prédéfinis et **en ce que**, lorsqu'une intrusion d'objet non autorisée est détectée, l'unité de commande et d'évaluation génère le signal de sécurité.

5. Dispositif capteur (1) selon l'une des revendications 1 à 4, **caractérisé en ce que** le au moins un capteur (6) est un capteur de sécurité.

6. Dispositif de capteurs (1) selon la revendication 5, **caractérisé en ce que** l'unité de commande et d'évaluation est intégrée dans le au moins un capteur (6) ou **en ce que** l'unité de commande et d'évaluation est une commande de sécurité (8).

7. Dispositif de capteurs (1) selon l'une des revendications 1 à 6, **caractérisé en ce que** le au moins un capteur (6) est un capteur optique ou un capteur radar.

8. Dispositif de capteurs (1) selon la revendication 7, **caractérisé en ce que** le au moins un capteur (6) est un capteur de distance de surface (9) ou un rideau lumineux (10).

9. Dispositif de détection (1) selon l'une des revendications 1 à 8, **caractérisé en ce que** le signal de sécurité est une commande d'arrêt pour l'équipement de travail.

10. Dispositif de détection (1) selon l'une des revendications 1 à 9, **caractérisé en ce que** l'équipement de travail est une unité de transport qui est sécurisée sur ses côtés opposés par un capteur (6) respectif, les champs de protection (7) dépassant vers le haut au-dessus d'une surface de transport (2a) de l'unité de transport.

11. Dispositif capteur (1) selon la revendication 10, **caractérisé en ce que** les capteurs (6) sont chacun formés par un rideau lumineux (10) constitué d'un certain nombre d'axes de faisceaux, l'unité de commande et d'évaluation enregistrant lesquels des axes de faisceaux sont interrompus en cas d'intervention d'un objet et générant le signal de sécurité en fonction de cela.

12. Dispositif de détection (1) selon la revendication 11, **caractérisé en ce que** l'interruption de l'axe ou des axes de faisceau les plus bas d'une barrière immatérielle (10) est évaluée dans l'unité de commande et d'évaluation comme l'intrusion dangereuse d'un objet.

13. Dispositif capteur (1) selon l'une des revendications 11 ou 12, **caractérisé en ce que** l'interruption de l'axe ou des axes de faisceau supérieurs d'une barrière immatérielle (10) est évaluée dans l'unité de commande et d'évaluation comme l'intrusion dangereuse d'un objet.

14. Dispositif capteur (1) selon l'une des revendications 12 ou 13, **caractérisé en ce que** la génération d'un signal de sécurité n'a lieu que lorsque les axes de faisceau supérieurs et/ou inférieurs sont interrompus pendant une durée minimale spécifiée.

15. Procédé de surveillance d'une zone dangereuse sur un équipement de travail à l'aide d'un dispositif de détection (1) comprenant au moins un capteur (6) qui est conçu pour surveiller un champ de protection (7), le champ de protection (7) permettant de surveiller un accès latéral à l'équipement de travail, **caractérisé en ce qu'**il est prévu une unité de commande et d'évaluation au moyen de laquelle une distinction est effectuée entre les intrusions d'objets dangereuses et les intrusions d'objets non dangereuses d'objets dans le champ de protection (7), dans lequel une analyse résolue en position et, le cas échéant, également résolue dans le temps des interventions d'objets est effectuée, et **en ce que** l'unité de commande et d'évaluation ne génère un signal de sécurité qu'en cas d'intervention dangereuse d'un objet, indépendamment du fait que l'objet soit un objet critique pour la sécurité ou un objet non critique pour la sécurité.
